Europäisches Patentamt

European Patent Office

Office européen des brevets

(19)

(11) **EP 1 189 217 A2**

(12) **EUROPEAN PATENT APPLICATION**

(43) Date of publication:
20.03.2002 Bulletin 2002/12

(51) Int Cl.7: **G11B 7/24**

(21) Application number: **01121746.0**

(22) Date of filing: **18.09.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **18.09.2000 JP 2000282327**

(71) Applicant: **National Institute of Advanced
Industrial Science and Technology
Tokyo (JP)**

(72) Inventors:
• **Kawamoto, Tohru
Tsukuba-shi, Ibaraki (JP)**
• **Abe, Shuji
Tsukuba-shi, Ibaraki (JP)**

(74) Representative:
**Forstmeyer, Dietmar, Dr. rer. nat., Dipl.-Chem. et
al
Boeters & Bauer,
Bereiteranger 15
81541 München (DE)**

(54) **Optical storage element**

(57) An optical storage element capable of writing and/or erasing information by irradiation with light, which element comprises a first unit composed of a first photo-induced phase-transition substance that gets stable in a first state, and a second unit composed of a second photo-induced phase transition substance that gets stable in a second state, the first and second units being arrayed in a superlattice-like form.

## Description

FIELD OF THE INVENTION

The present invention relates to a novel optical storage element for writing and/or erasing information by irradiation with light, and more specifically, to an optical storage element capable of writing and/or erasing information by light and saving electric power in comparison with the current optical storage element.

BACKGROUND OF THE INVENTION

One of conventional storage media that carries out writing information by irradiation with light is DVD-RAM. In a storage apparatus using the DVD-RAM, firstly a predetermined position of a storage material of the DVD-RAM is irradiated with light, thereby raising the temperature of the position at least to the melting point thereof. Then, in a cooling process from the raised temperature, the predetermined position is changed from a crystalline state to an amorphous state, thereby writing (or erasing) information to control the information storage. Thus, heretofore irradiation with light has been used to raise the temperature of a material for storage, which requires much energy in irradiation with light to raise the temperature of the material for storage to the melting point thereof.

In place of phase-transition by way of heat based on temperature rise by irradiation with light and cooling process, a research on utilizing light energy directly for structural phase transition by using a photo-induced phase transition substance is recently underway (for example, see "Photo-induced phase transition and its dynamics" in the Japanese Ministry of Education, Specific Area Research B). A Co-Fe Prussian blue-type complex can be given as an example of such a photo-induced phase transition substance (for example, see Sato et al.'s "Photoinduced Magnetization of a Cobalt-Iron Cyanide" Science, Volume 272, p.703).

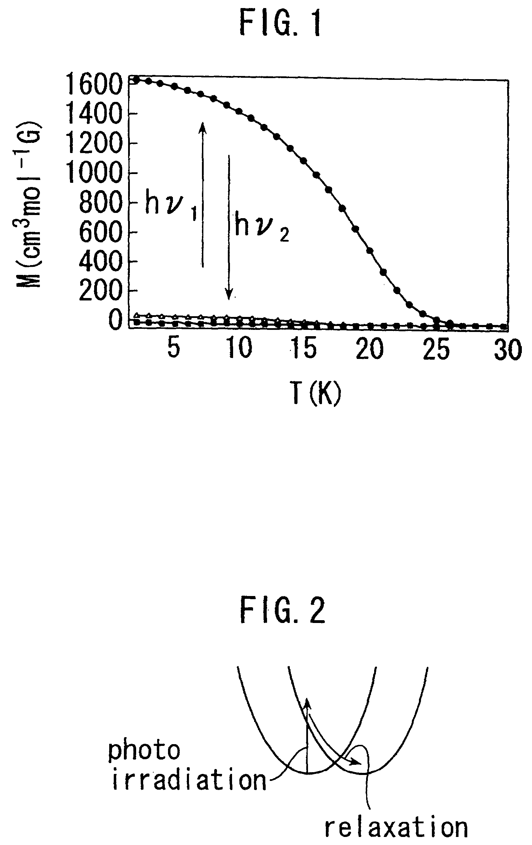

As shown in Fig. 1, the Co-Fe Prussian blue-type complex is capable of bidirectional switching by using lights different in wavelength. Fig. 1 shows graphs of magnetization curves of the Prussian blue-type complex, respectively, before irradiation with light as marked by ■(black square), after irradiation with light at 500 to 700 nm in wavelength as marked by ● (black circle), and after irradiation with light at 1319 nm in wevelength as marked by △ (white triangle). There are also discovered photo-induced phase-transition phenomena in some other substances such as a spin crossover complex.

It has been reported concerning TTF-CA, an organic charge-transfer complex, that one photon can induce a structural change of about 300 molecules (Koshihara et al.'s "Photo-induced cooperative charge transfer in low dimensional organic crystals," J. Phys. Chem. B., 103, p.2592 (1999)). Thus, it is expected that a method using a photo-induced phase-transition substance causes a change in the structure of the substance with lower energy than in the case of a structural change of the substance by way of the above-mentioned changing of temperature. However, substances causing a photo-induced structural change so far discovered have such shortcomings as the operating temperature is low, the life of information storage is short and the like, and have not been practically applied.

SUMMARY OF THE INVENTION

The present invention is an optical storage element capable of writing and/or erasing information by irradiation with light, which element comprises a first unit composed of a first photo-induced phase-transition substance to get stable in a first state and a second unit composed of a second photo-induced phase-transition substance to get stable in a second state, wherein said first and second units are arrayed in a superlattice-like form.

Other and further features and advantages of the invention will appear more fully from the following description, take in connection with the accompanying drawings.

BRIEF DESCRIPTION OF THE DRAWINGS

Fig. 1 shows magnetization curves of a Co-Fe Prussian blue-type complex.
Fig. 2 is an explanatory view showing a typical shape of potential of a substance making a photo-induced structural change.
Figs. 3(a), 3(b) and 3(c) are explanatory views showing an example of cooperative interaction, in which Fig. 3(a) and Fig. 3(b) show phase-stabilizing structures, and Fig. 3(c) shows a state of co-existence of the phase-stabilizing structures in Fig. 3(a) and Fig. 3(b), resulting in an unstable state due to energy loss in the boundary between the structures.
Fig. 4 is an explanatory view showing a shape of potential to shorten the life of information storage.

Fig. 5(a) is an explanatory view showing substance units having three kinds of different potential structures; Fig. 5(b-1) is an explanatory view of an optical storage element by a conventional photo-induced phase-transition substance; and Fig. 5(b-2) is an explanatory view of an optical storage element by a photo-induced phase-transition substance according to the present invention.

Figs. 6(a), 6(b) and 6(c) are explanatory views showing examples of superlattice structure, in which Fig. 6(a) shows a one-dimensional superlattice, Fig. 6(b) shows a two-dimensional superlattice, and Fig. 6(c) shows a three-dimensional superlattice.

Fig. 7 is a graph showing phase-transitions, under irradiation with light, of a homogeneous cluster.

Fig. 8 is a graph showing phase-transitions, under irradiation with light, of a superlattice cluster.

Fig. 9 is a view showing a superlattice in which the lengths of respective sides of each unit are alternately made different.

Fig. 10 is a view showing a phase-transition, under irradiation with light, of the superlattice system as shown in Fig. 9.

Figs. 11(a) and 11(b) are views showing crystalline structure of a Co-Fe Prussian blue analogue, in which Fig. 11 (a) shows the structure of a matrix, and Fig. 11(b) shows a state that some of the iron are vacant and cyano groups around the vacancies are replaced by water.

Figs. 12(a) and 12(b) are diagrams showing potentials of cobalt cluster in a Co-Fe Prussian blue analogue, in which Fig. 12(a) shows a case when cobalt is surrounded by cyano groups in an octahedral form, and Fig. 12(b) shows a case when one of the cyano groups is replaced by water.

## DETAILED DESCRIPTION OF THE INVENTION

According to the present invention, there are provided the following means:

(1) An optical storage element capable of writing and/or erasing information by irradiation with light, said element comprising a first unit composed of a first photo-induced phase-transition substance to get stable in a first state and a second unit composed of a second photo-induced phase-transition substance to get stable in a second state, wherein said first and second units are arrayed in a superlattice-like form;

(2) The optical storage element as stated in the above (1), wherein said first unit and said second unit are arrayed to form a three-dimensional superlattice;

(3) The optical storage element as stated in the above (1), wherein said first unit and said second unit are arrayed to form a two-dimensional superlattice;

(4) The optical storage element as stated in the above (1), wherein said first unit and said second unit are arrayed to form a one-dimensional superlattice;

(5) The optical storage element as stated in any one of the above (1) to (4), wherein at least one of said first photo-induced phase-transition substance and said second photo-induced phase-transition substance is a Prussian blue-type transition metal complex; and

(6) The optical storage element as stated in any one of the above (1) to (4), wherein at least one of said first photo-induced phase-transition substance and said second photo-induced phase-transition substance is a perovskite-type manganese oxide.

Firstly, the following is a brief explanation of a theory of photo-induced structural change of a substance. The substance to be used has two stable structures, as shown in Fig. 2. Fig. 2 is a diagram showing a typical shape of potential of such a substance that shows a photo-induced structural change.

The substance undergoes transition from a state of stable structure to another state by irradiation with light, and then to still another state, via structural relaxation, to settle. An important matter herein is an existence of interaction acting among units within the substance.

In a system where interaction to bring about the same state works among respective units, the whole structure changes cooperatively only by transferring (transition) the substance to some states. Following is an example thereof.

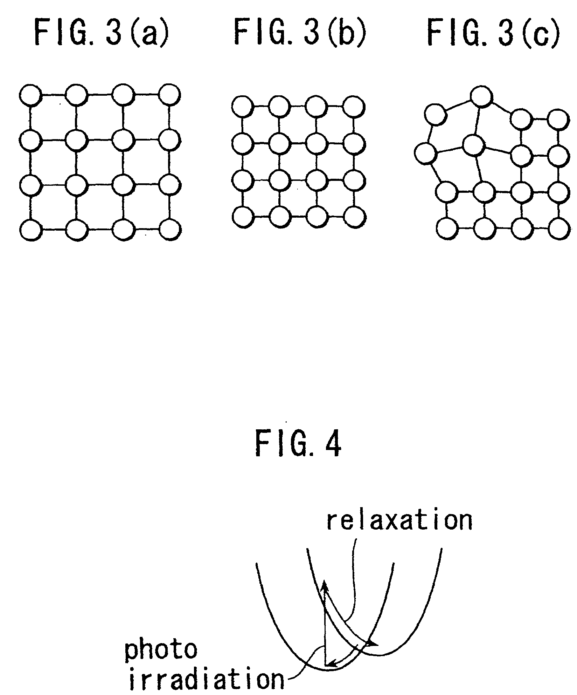

Figs. 3(a), Fig. 3(b) and Fig. 3(c) show cases where there are two kinds of causes for phase stability. Specifically, they show cases where two kinds of stable lengths of volume expansion, i.e., a distance between atoms.

In Figs. 3(a), 3(b) and 3(c), the phase of Fig. 3(a), showing the first state, i.e., an a-state, and the phase of Fig. 3(b), showing the second state, i.e., a b-state, are the phases of stable structures. However, the phase of Fig. 3 (c) which is a co-existing phase of those of Fig. 3(a) and Fig. 3(b) is unstable because it is energetically disadvantageous between (the boundaries of) the phase of Fig. 3(a) and the phase of Fig. 3(b). As a result, the substance in the state of co-existing phase of Fig. 3(c) tends to transit to the structural phase either of Fig. 3(a) or Fig. 3(b). This is an example of the cooperative interaction.

In the following, will be discussed a case in which irradiation with light causes a structural change from the phase of Fig. 3(b) to the phase of Fig. 3(a). The phase shown in Fig. 3(c) is the phase where one unit of the phase of Fig. 3(b) is changed to the a-state.

As mentioned above, since the co-existing state of two phases such as the phase of Fig. 3(c) is energetically disadvantageous, the substance has a tendency to transit to either the phase of Fig. 3(a) or the phase of Fig. 3(b). However, since there are quite more units in the b-state than in the a-state in number, the substance returns to the phase of Fig. 3(b). Consequently, in order to change the substance from the phase of Fig. 3(b) to the phase of Fig. 3 (a), it is necessary to make numerous a-states, which requires a considerable dose of irradiation with light.

What was important about the conventional photo-induced phase-transition substance was to seek for a substance that showed a photo-induced structural change of the shape of potential as shown in Fig. 2.

Fig. 4 is a diagram showing a shape of potential in which the life of information storage is shortened, and it shows the difference in energy between two phase-stable structures is great. In this case, a new state produced by irradiation with light returns to its original state by thermal relaxation, which means that the storage of information is to be lost.

Consequently, in an optical storage element suitable for writing and/or erasing of information, the energies of the above two kinds of phase structures must be considerably close, so as to cause a bi-directional photo-induced phase-transition. Heretofore, a substance to satisfy this requirement had to be searched for.

Some spatial units to be used in the present invention are defined as follows. The smallest constituent unit is a minimum unit to take the a-state or the b-state. This is called "site." In fact, the a-state and the b-state often means a spin state. In that case, the site means one atom or one molecule that is the unit of one spin.

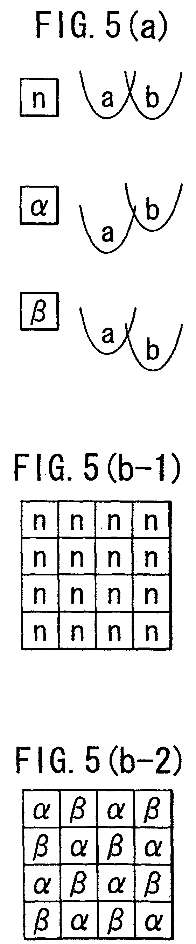

The term "unit" is used to mean an aggregate of sites of the same kind. Namely, by the unit is meant one square in Fig. 5(a).

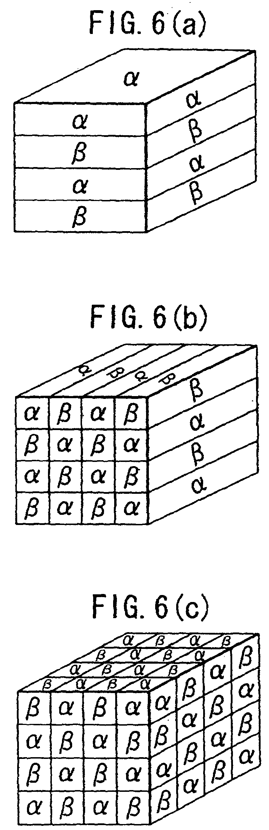

The largest block discussed in the present invention is called "system", which means the blocks such as shown in Fig. 5(b-1), Fig. 5(b-2), Fig. 6(a), Fig. 6(b) and Fig. 6(c).

In fact, a block becomes a constituent unit for recording one piece of information, and the whole block getting in the a-state or the b-state becomes a record of information. The entire system getting integrated into one state is called "phase."

Also, a system prepared by artificially combining a plurality of units is called "superlattice system", which is roughly classified into a one-dimensional superlattice, two-dimensional superlattice and three-dimensional superlattice. Examples of these are shown in Figs. 6(a), 6(b) and 6(c). Fig. 6(a) shows a one-dimensional superlattice, Fig. 6(b) a two-dimensional superlattice, and Fig. 6(c) a three-dimensional superlattice, respectively.

The present invention basically proposes arraying in a superlattice-like form two kinds of substances making photo-induced structural change of such a shape of potential as shown in Fig. 4. This enables to solve the above-mentioned problems.

Fig. 5(a) shows three kinds of substances having different shapes of potential, in which those substances are aggregates of some sites. Fig. 5(b-1) shows the conventional photo-induced phase-transition substance, in which this substance is composed of one unit. Fig. 5(b-2) shows an element proposed in this invention, in which two kinds of substances showing photo-induced structural change of different shapes of potential are made into a superlattice form (superstructure). Conventionally, as shown in the top row of Fig. 5(a), a substance having substantially equal a-state energy and b-state energy has been discussed.

The substances shown in the middle and bottom rows of Fig. 5(a) show photo-induced structural changes of shapes of potential to become stable in either the a-state or the b-state. The unit containing a substance which gets stable in the a-state is called $\alpha$-unit, and the unit containing a substance to become stable in the b-state is called $\beta$-unit. Fig. 5(b-1) shows a conventional homogeneous optical storage element, containing a substance in which the energies in both a-state and b-state are almost equal. In this optical storage element, one piece of information is stored in a cluster composed of several molecules.

In the optical storage element of the present invention, $\alpha$-unit and $\beta$-unit are arrayed in a form of superlattice, as plainly shown in Fig. 5(b-2), Fig. 6(a), Fig. 6(b) and Fig. 6(c). In a cluster as large as the one illustrated in these figures, is stored one piece of information.

In the following, will be discussed changing into the phase of the b-state by performing irradiation with light to the superlattice structure of the phase in the a-state. In general, such a tendency is seen as it takes very much time in phase-transition until a nucleus is formed, that is until the range of the phase-transition becomes a certain size, and, after that, the change proceeds rapidly.

In case of a homogeneous structure, such as shown in Fig. 5(b-1), it takes much time for nucleation. On the other hand, in such a superlattice structure as shown in Fig. 5(b-2), the $\beta$-units are more stable locally in the phase of the b-state, so that the phase transits rapidly to the b-state. This serves as a nucleus, and, after all, the phase-transition is completed in a short period of time. To be completed in a short period of time means shortening of the time of irradiation with light, which results in energy-saving.

Further, since conversion of the $\beta$ unit into the b-state phase is enabled by irradiation with weaker light, this also realizes energy-saving. Also, different from the case of the conventional homogeneous element, the optical storage element of the present invention may differ in energy in the phase of the a-state and the phase of the b-state, so that choice can be made in a wide range to seek for substances and in material design.

Simulations were carried out with a classical Ising model so as to strengthen the inventors' proposal. For Hamiltonian, i.e., the entire energy of the system, the following model was used.

$$H = -2J \sum_{i,\delta} S_i S_{i+\delta} + \sum_i \Delta S_i$$

In the above equation, S$i$ represents a state of i-site and is supposed to take 1/2 when it is in the a-state, while it is supposed to take -1/2 when it is in the b-state. Further, $\delta$ is to take the sum between nearby atoms (molecules). In other words, when the same state is taken between adjacent atoms (molecules), one of the sums of the first term takes -2J*(1/2)*(1/2) = -J/2, and in a different state J/2 is taken. Namely, between the adjacent atoms, the values are different by J between the case of the same state and the case of a different state. The second term shows a tendency for each site. Namely, when $\Delta < 0$, the energy is lower by $|\Delta|$ in the a-state ($Si$ = 1/2) than in the b-state ($Si$ = -1/2), which means the $\alpha$-site ($\alpha$ unit) in the middle row of Fig. 5(a). The homogeneous system shown in Fig. 5(b-1) can be expressed by $\Delta$ = 0, and the superlattice system of Fig. 5(b-2) can be expressed by a mixture of the part of $\Delta < 0$ ($\alpha$-unit) and the part of $\Delta > 0$ ($\beta$-unit). In the following, will be discussed changing to the b-state phase by performing irradiation with light to the a-state phase. It is concluded that the irradiation with light is effective in changing one site in the a-state to the b-state by one-time absorption of light.

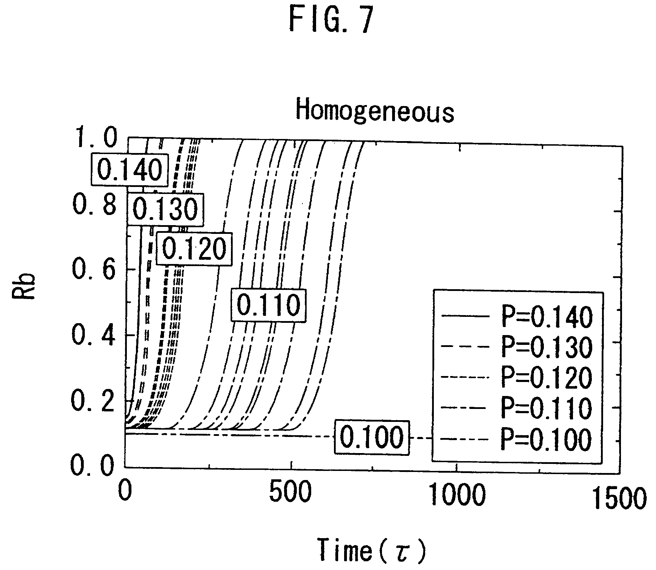

Fig. 7 shows a phase-transition of a homogeneous cluster composed of 50×50×50 sites, under irradiation with light, and shows the result of calculation regarding the homogeneous system as shown in Fig. 5(b-1). The abscissa indicates the time ($\tau$) from the beginning of irradiation with light, and the ordinate Rb indicates the ratio of the sites that take the b-state. Further, P indicates the amount of absorption of light per unit time, i.e., the intensity of the irradiation with light. The ratio Rb was calculated in the order of intensity from the highest one to the lowest one, i.e., (1) P = 0.140, (2) P = 0.130, (3) P = 0.120, (4) P = 0.110, and (5) P = 0.100. For a plurality of loci under the same condition, different random number sequences were used.

As evident from Fig. 7, it is understood that, for a certain period of time after starting the irradiation with light, Rb remains constant and rapidly increases from a certain time point. This means that, when a location where a site in the b-state reaches a density of a certain degree or above occurs, the location becomes a nuclei and a change to the b-state proceeds rapidly. Also, when the intensity of the irradiation with light is weakened, it takes longer period of time to change into the b-state phase. This is because it takes longer time for formation of the location to become the above-mentioned nuclei. At P < 0.1, there occurs no change into the b-state phase. This means that without a certain degree of irradiation with light, no transition or change occurs.

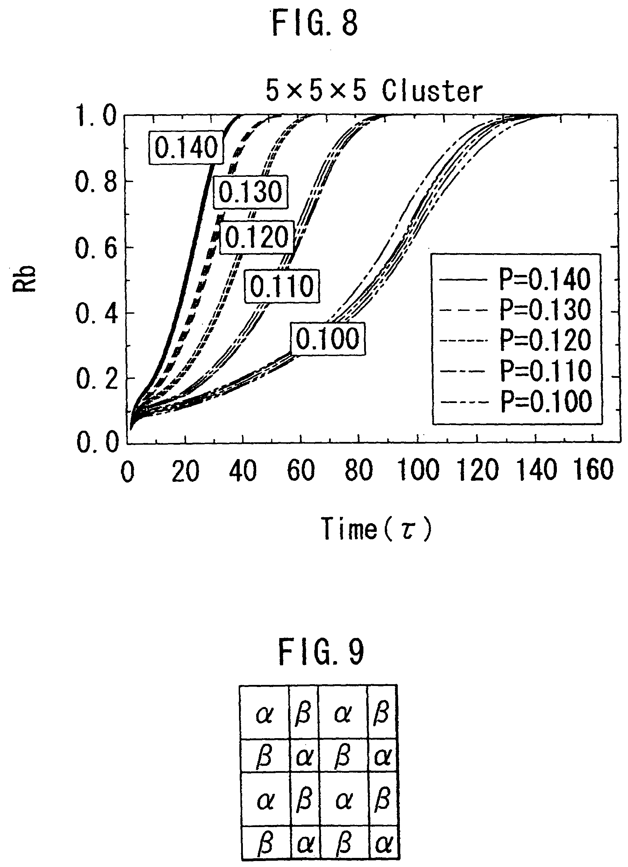

Fig. 8 shows phase-transitions, under the irradiation with light, of a superlattice cluster with 5 × 5 × 5 sites as a unit, and shows the result of a calculation regarding the superlattice system as shown in Fig. 5(b-2). It is assumed that one unit is a cube one side of which includes 5 sites, and that the system is a cube with 10 units per side. One system is a cube having 50 sites per side, with $\alpha$-units and $\beta$-units mixed in a checker-like pattern. Namely, one system is constituted like the structure shown in Fig. 6(c).

As evident from Fig. 8, it is understood that with this superlattice system it takes much shorter time to change into the b-state phase than the homogeneous system. This is because the b-state is stable in the $\beta$-unit, which facilitates the formation of a nucleus (nucleation) there. Even in case of P = 0.1 which did not cause a phase-transition in the homogeneous system, a phase-transition occurred, which means that the superlattice system can induce a phase-transition with a smaller dose of irradiation with light. For a plurality of loci under the same condition, different random number sequences were used.

When considering a homogeneous system, for realizing bi-directional phase-transitions it was necessary to assume a substance having energies in the a-state and b-state to be almost equal. This is a highly restrictive condition in developing substances. In the following is explained that such a condition can be considerably relaxed when considering a superlattice system.

Fig. 9 shows a superlattice with units having sides alternately different in length. In this case, the total number of the $\alpha$-sites in the $\alpha$-units and that of the $\beta$-sites in the $\beta$-units within the system can be set different from each other. For example, if the length of one side is set alternatively as 7, 3, 7 and 3, it is possible to set (the number of $\alpha$-sites) :

(the number of β-sites) = 532 : 468.

Consequently, in this case, even if the absolute values of D in both α- and β-sites are not equal each other, it is possible to equalize the total energy of the system in the a-state phase and the b-state phase. Herein, D represents a value of energy in an individual site; and $D_\alpha$ and $D_\beta$ are used to represent the energy in one α-site and one β-site, respectively. Namely, where $|D_\alpha| : |D_\beta| = 468 : 532$, it is possible to make the total energy of the system equal in both a-state phase and b-state phase by making the length of one side alternately 7, 3, 7, 3....

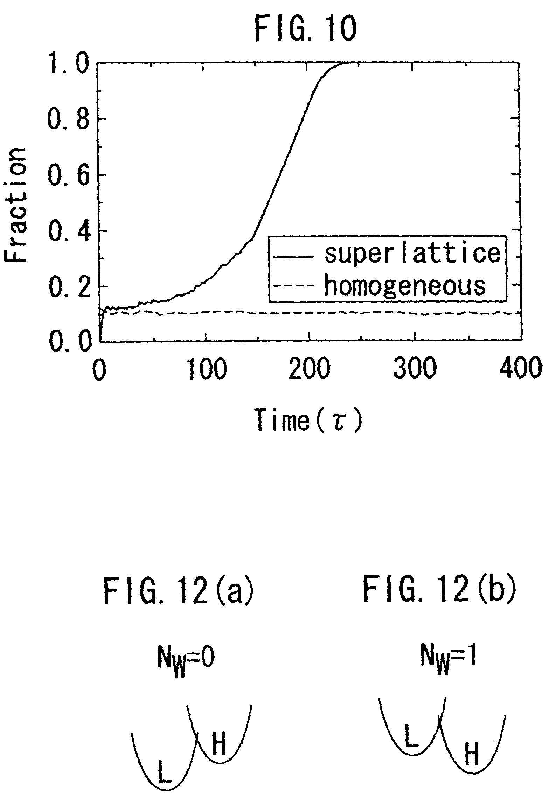

In Fig. 10, the solid line (superlattice) denotes the phase-transition under the irradiation with light of the superlattice system shown in Fig. 9. This phase transition is a phase transition from the a-state to the b-state, when the entire energy is equal between the phase in a-state and the phase in b-state. The dotted line (homogeneous) denotes a homogeneous system consisting of only the α-sites among them. By this, sites that singly never cause phase-transition can cause phase-transition by forming a superlattice structure.

In addition to the above, a bi-directional phase-transition, that is, both the phase transitions from a-state to b-state and from b-state to a-state, is assumed possible in any of the superlattice structures shown in Figs. 6(a), 6(b) and 6(c). Specifically, in the present invention, it is thus assumed to be possible to carry out bidirectional switching (that corresponds to writing and erasing, respectively) in both the phase transition from the a-state to the b-state and the phase transition from the b-state to the a-state, by changing the wavelength of light to be irradiated, using the optional storage element of the present invention.

Next, there is discussed the probability of realization of the above-proposed superlattice system. The inventors of the present invention have suggested that there has been a phenomenon similar to this superlattice system in the photo-induced magnetization phenomenon of Co-Fe Prussian blue-type complexes (Kawamoto et al.'s, "Local mechanism in photo-induced phase transition in Co-Fe Prussian blue analogue," proceeding of LLD2K (Jul. 23-26, 2000, Tsukuba)).

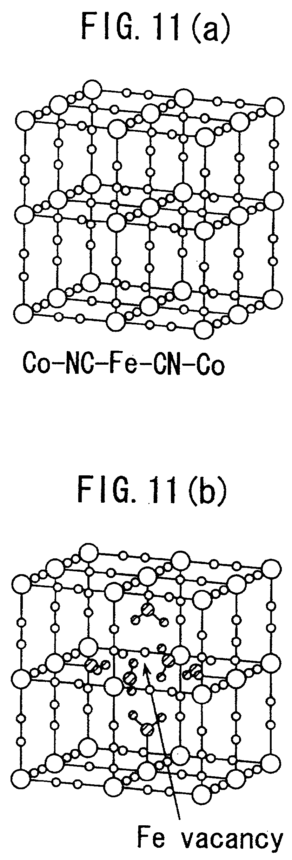

Figs. 11(a) and 11(b) show the crystalline structures of a Co-Fe Prussian blue analogue. Fig. 11(a) shows the structure of a matrix, and Fig. 11(b) shows the structure in which vacancies have taken place of some Fe locations and the cyano groups around them are replaced by water. As a result, in some of the cobalt atoms the cyano group that is a ligand is replaced by water, and some kinds of cobalt exist in chemically different environments. As a result, as shown in Figs. 12(a) and 12(b), cobalt completely surrounded by cyano groups is stabilized in a non-magnetic state (L), while cobalt in which at least one cyano group is replaced by a water molecule is stabilized in a magnetic state (H). This Co-Fe Prussian blue analogue (Co-Fe Prussian blue-type complex), as well as other Prussian blue-type transition metal complexes, are the very realization of the superlattice system to be used in the present invention, as proposed herein by the present inventors.

However, since the arrangement of Fe-vacancies is at random, it is assumed that a periodic structure such as discussed above is not taken, and that, as a result, the action temperature is lowered.

As another possibility, perovskite-type manganese oxides can be given as another examples of the photo-induced phase-transition substances to be used in the present invention. A homogeneous system using this substance is already patented (Japanese Patent No. 3012902) and is under discussion as a switching system using photo-induced phase transition. Also, researches of oxide systems to materialize lamination or superlattice are being carried out by many groups (Lu et al.'s "Magnetoresistance of coherently strained $La_{2/3}Ba_{1/3}MnO_3/SrTiO_3$ superlattices" Physical Review B, Volume 62, No. 23, p.15806 (2000)), and it is assumed that the superlattice structure we proposed herein is also sufficiently realizable.

In the present invention, the optical storage element may be used, for example, in a form of disk, similarly to a conventional DVD-RAM. As the method to form the optical storage element of the present invention in disk-like form, conventionally known methods can be mentioned.

According to the present invention, an optical storage element that uses a photo-induced phase-transition substance, and that is small in energy consumption, has a long life of information storage, and is capable of writing and/or erasing by irradiation with light, at a high speed, can be provided.

Having described our invention as related to the present embodiments, it is our intention that the invention not be limited by any of the details of the description, unless otherwise specified, but rather be construed broadly within its spirit and scope as set out in the accompanying claims.

## Claims

1. An optical storage element capable of writing and/or erasing information by irradiation with light, said element comprising a first unit composed of a first photo-induced phase-transition substance to get stable in a first state and a second unit composed of a second photo-induced phase-transition substance to get stable in a second state, wherein said first and second units are arrayed in a superlattice-like form.

2. The optical storage element as claimed in claim 1, wherein at least one of said first photo-induced phase-transition substance and said second photo-induced phase-transition substance is a Prussian blue-type transition metal complex.

3. The optical storage element as claimed in claim 1, wherein at least one of said first photo-induced phase-transition substance and said second photo-induced phase-transition substance is a perovskite-type manganese oxide.

4. The optical storage element as claimed in claim 1, wherein said first unit and said second unit are arrayed to form a three-dimensional superlattice.

5. The optical storage element as claimed in claim 4, wherein at least one of said first photo-induced phase-transition substance and said second photo-induced phase-transition substance is a Prussian blue-type transition metal complex.

6. The optical storage element as claimed in claim 4, wherein at least one of said first photo-induced phase-transition substance and said second photo-induced phase-transition substance is a perovskite-type manganese oxide.

7. The optical storage element as claimed in claim 1, wherein said first unit and said second unit are arrayed to form a two-dimensional superlattice.

8. The optical storage element as claimed in claim 7, wherein at least one of said first photo-induced phase-transition substance and said second photo-induced phase-transition substance is a Prussian blue-type transition metal complex.

9. The optical storage element as claimed in claim 7, wherein at least one of said first photo-induced phase-transition substance and said second photo-induced phase-transition substance is a perovskite-type manganese oxide.

10. The optical storage element as claimed in claim 1, wherein said first unit and said second unit are arrayed to form a one-dimensional superlattice.

11. The optical storage element as claimed in claim 10, wherein at least one of said first photo-induced phase-transition substance and said second photo-induced phase-transition substance is a Prussian blue-type transition metal complex.

12. The optical storage element as claimed in claim 10, wherein at least one of said first photo-induced phase-transition substance and said second photo-induced phase-transition substance is a perovskite-type manganese oxide.

FIG. 1

FIG. 2

FIG. 3 (a)　　FIG. 3 (b)　　FIG. 3 (c)

FIG. 4

relaxation

photo
irradiation

FIG. 5 (a)

FIG. 5 (b-1)

FIG. 5 (b-2)

FIG. 6(a)

FIG. 6(b)

FIG. 6(c)

# FIG. 7

Homogeneous

## FIG. 8

$5 \times 5 \times 5$ Cluster

## FIG. 9

FIG. 10

FIG. 12(a)

$N_W=0$

FIG. 12(b)

$N_W=1$

# FIG. 11 (a)

Co-NC-Fe-CN-Co

# FIG. 11 (b)

Fe vacancy